(19)

**Europäisches Patentamt**
**European Patent Office**
**Office européen des brevets**

(11)  **EP 4 534 629 A1**

(12)  **EUROPEAN PATENT APPLICATION**
published in accordance with Art. 153(4) EPC

(43) Date of publication:
**09.04.2025 Bulletin 2025/15**

(21) Application number: **23815608.7**

(22) Date of filing: **17.04.2023**

(51) International Patent Classification (IPC):
$C10C\ 3/02^{(2006.01)}$   $\quad C01B\ 32/00^{(2017.01)}$
$C08L\ 95/00^{(2006.01)}$   $\quad C10C\ 1/16^{(2006.01)}$

(52) Cooperative Patent Classification (CPC):
**C01B 32/00; C08L 95/00; C10C 1/16; C10C 3/02;**
**Y02E 60/10**

(86) International application number:
**PCT/JP2023/015323**

(87) International publication number:
**WO 2023/233847 (07.12.2023 Gazette 2023/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.06.2022 JP 2022090290**

(71) Applicant: **Resonac Corporation**
**Tokyo 105-7325 (JP)**

(72) Inventors:
• **ISHIKAWA, Yutaro**
  **Tokyo 105-8518 (JP)**
• **NISHI, Nobuhiro**
  **Tokyo 105-8518 (JP)**
• **OTA, Keisuke**
  **Tokyo 105-8518 (JP)**

(74) Representative: **Strehl & Partner mbB**
**Maximilianstrasse 54**
**80538 München (DE)**

(54)  **METHOD FOR PRODUCING PETROLEUM PITCH AND PETROLEUM PITCH**

(57)    Provided are a petroleum pitch having a high fixed carbon content and excellent impregnability into fired bodies during production of carbon materials such as graphite electrodes, and a method for producing the same. Petroleum pitch having a quinoline-insoluble fraction (QI) of 0.5 mass% or less, a toluene-insoluble fraction (TI) of 3.0 mass% or less, a softening point of 60°C to120°C, and a viscosity at 200°C of 200 mPa·s or less, the fixed carbon content Y (mass%) of which satisfies formula (1). A method for producing petroleum pitch comprising: a step for heat-treating petroleum heavy oil (step 1); a step for distilling the heat-treated product obtained in step 1 and obtaining a pitch 1 as a high-boiling-point component (step 2); a step for removing the toluene-insoluble fraction (TI) from the pitch 1 obtained in step 2 and obtaining a component in which the toluene-insoluble fraction (TI) has been decreased (step 3), and a step for distilling the component in which the toluene-insoluble fraction (TI) obtained in step 3 has been decreased and obtaining a pitch 2 as a high-boiling-point component (step 4). $80.0 \geq Y > 0.2X + 29.5$ (1) Y: fixed carbon content (mass%), X: softening point (°C) ($60 \leq X \leq 120$)

Fig. 2

EP 4 534 629 A1

## EP 4 534 629 A1

### Description

TECHNICAL FIELD

The present invention relates to a petroleum-based pitch suitable for an impregnation pitch used for the production of carbon materials, such as a graphite electrode, and a method for producing the same.

BACKGROUND

Carbon materials, such as a graphite electrode used in an electric furnace for remelting iron are produced by kneading and forming aggregates, such as coke, and a pitch (referred to as "binder pitch") at a temperature equal to or higher than the softening point of the binder pitch, followed by calcining, and then graphitizing. Since it is necessary that the carbon material have properties, such as high mechanical strength, high electrical conductivity, and high thermal conductivity, the carbon material preferably has high density. However, the calcined body has a structure having a large number of pores due to volatilization of low-molecular-weight components in the binder pitch during the calcining step, etc. Therefore, in the production process, impregnating the calcined body with a pitch (referred to as "impregnation pitch") followed by re-calcining several times reduces the porosity and makes the obtained carbon material have high density. Therefore, an impregnation pitch is indispensable for the production of high-quality carbon materials.

Heavy residue oil (ethylene bottom oil), which is a by-product when producing olefins, such as ethylene and propylene by steam cracking or thermal cracking of petroleum hydrocarbons, such as naphtha, is used only partially as a raw material for carbon black, and mostly as a fuel. Therefore, converting this ethylene bottom oil into high value-added products is an object in the relevant technical field. In order to achieve this object, attempts have been made to produce an impregnation pitch for producing carbon materials, and a binder pitch for producing carbon materials from ethylene bottom oil, taking advantage of the characteristics of ethylene bottom oil, which contains large amounts of aromatic compounds. However, a petroleum-based pitch produced from petroleum-based heavy oil, such as ethylene bottom oil, has a lower fixed carbon content than a coal tar pitch produced from coal tar, and thus the density of the obtained carbon material tends to be lower. Therefore, petroleum-based pitches are currently not used very often.

Some of the most important properties of impregnation pitch are impregnation property and fixed carbon content. The better the impregnation property, the easier it is for the impregnation pitch to penetrate into the fine pores generated in the calcined body during the impregnation step, which is preferable since the density of the obtained carbon material increases. The higher the fixed carbon content, the smaller the volatile matter during calcining, and the generation of pores can be reduced. As a result, the number of impregnation and re-calcining steps can be reduced, which is economically preferable. Various methods for improving the impregnation property of coal tar pitch are known, and a representative method is to remove or reduce a quinoline insoluble matter (QI) in a pitch. Coal tar pitches usually contain QI of several% by mass to several tens% by mass, which is derived from primary QI contained in the coal tar as the raw material and secondary QI that can be generated in the heat treatment step. In the impregnation step, the QI is present as solid fine particles even when the pitch is melted, and thus significantly inhibits the penetration of the pitch into the pores of the calcined body. Therefore, it is desirable that the coal tar-based impregnation pitch be substantially free of QI (Patent Literature 1).

On the other hand, petroleum-based heavy oil (particularly ethylene bottom oil) contains little QI, and thus, heat treatment of petroleum-based heavy oil under conditions which do not generate QI allows the preparation of a petroleum-based pitch which is substantially free of QI without any QI removal or reducing steps. In fact, JP S60-92388 A (Patent Literature 2) reports that a petroleum-based pitch having a QI content of 1% by mass or less can be produced from petroleum-based heavy oil without any QI removal or reducing steps, and the obtained petroleum-based pitch can be suitably used as an impregnation pitch. However, many of the petroleum-based pitches reported so far, including the petroleum-based pitches described in Patent Literature 2, have a lower fixed carbon content than coal tar pitches having the same softening point (Patent Literature 2 and Non-Patent Literature 1). As a method of improving the fixed carbon content of a petroleum-based pitch, there is a method of removing light components in the pitch by distillation, etc. However, the method has a problem in that the softening point and the viscosity also increase when the light components are removed, with the result that the impregnation property is reduced. Therefore, using conventional methods, it is difficult to produce a petroleum-based pitch that achieves both good impregnation property and high fixed carbon content.

[Citation List]

[Patent Literature]

[PTL 1] JP 2007-2124 A
[PTL 2] JP S60-92388 A

[NON-PATENT LITERATURE]

[NPL 1] Petroleum Derived Carbons Chapter 5 p.52 to p.62

SUMMARY OF INVENTION

[Technical Problem]

It is an object of the present invention to provide a petroleum-based pitch having excellent impregnation property into a calcined body at the time of producing a carbon material, such as a graphite electrode, and having a high fixed carbon content, and a method for producing the same. The "petroleum-based pitch" refers to a pitch produced from heavy oil derived from petroleum.

[Solution to Problem]

The present inventors have made intensive studies to achieve the above object. Specifically, the present inventors have investigated a method for subjecting petroleum-based heavy oil to a relatively severe heat treatment within a range of conditions which do not generate QI. When the present inventors investigated this method, it was possible to obtain a petroleum-based pitch containing no QI and having a high fixed carbon content. However, it was found that the impregnation property was remarkably poor (see Comparative Example 1, Comparative Example 3, and Comparative Example 4 of the present specification). This suggests that factors other than QI have a large effect on the impregnation property in petroleum-based pitches produced by a manufacturing process including a step of heat-treating petroleum-based heavy oil under relatively severe conditions. The present inventors have found that a toluene insoluble matter (TI), which does not affect the impregnation property in a coal tar pitch, affects the impregnation property in the petroleum-based pitch produced by a manufacturing process including a step of heat-treating petroleum-based heavy oil under relatively severe conditions, and have realized the results thereof in the present invention.

That is, the present invention relates to a method for a producing a petroleum-based pitch comprising the steps of: subjecting a petroleum-based heavy oil to a heat treatment (step 1); distilling the heat-treated product obtained in step 1 to obtain a pitch 1 as a high boiling point component (step 2); reducing a toluene insoluble matter (TI) of the pitch 1 obtained in step 2 (step 3); and distilling the component obtained in step 3 in which the toluene insoluble matter (TI) is reduced to obtain a pitch 2 as a high boiling point component (step 4). Further, the present invention relates to a petroleum-based pitch in which a quinoline insoluble matter (QI) is 0.5 % by mass or less, a toluene insoluble matter (TI) is 3.0% by mass or less, a softening point is 60°Cto 120°C, a viscosity at 200°C is 200 mPa·s or less, and a fixed carbon content Y (% by mass) satisfies formula (1):

$$80.0 \geq Y > 0.2X + 29.5 \ (1),$$

wherein

Y is a fixed carbon content (% by mass), and
X is a softening point (°C) ($60 \leq X \leq 120$).

More specifically, the present invention relates to the following [1] to [10].

[1] A method for producing a petroleum-based pitch comprising at least the following steps 1 to 4:

step 1: subjecting a petroleum-based heavy oil to a heat treatment;
step 2: distilling the heat-treated product obtained in step 1 to obtain a pitch 1 as a high boiling point component;
step 3: removing a toluene insoluble matter (TI) from the pitch 1 obtained in step 2 to obtain a component with reduced TI; and
step 4: distilling the component with reduced toluene insoluble matter (TI) obtained in step 3 to obtain a pitch 2 as a high boiling point component.

[2] The method for producing a petroleum-based pitch according to [1], wherein the petroleum-based heavy oil is ethylene bottom oil.

[3] The method for producing a petroleum-based pitch according to [1] or [2], wherein the heat treatment temperature in step 1 is 360°C to 500°C.

[4] The method for producing a petroleum-based pitch according to any one of [1] to [3], wherein the removing of the toluene insoluble matter (TI) in step 3 is carried out by adding a solvent to the pitch 1 and extracting a solvent soluble matter of the pitch 1 into the solvent, and wherein the solvent is at least one selected from the group consisting of benzene, alkylbenzene, cracked gasoline, and cracked kerosene.

[5] The method for producing a petroleum-based pitch according to any one of [1] to [4], wherein, in step 1, when the heat treatment temperature is 360°C to 390°C, the heat treatment time is 8 hours to 48 hours; when the heat treatment temperature is more than 390°C and 430°C or less, the heat treatment time is 0.5 hours to 24 hours; and when the heat treatment temperature is more than 430°C and 500°C or less, the heat treatment time is 0.1 hours to 16 hours.

[6] A method for producing a graphite electrode, wherein the petroleum-based pitch obtained by the production method according to any one of [1] to [5] is used as an impregnation pitch.

[7] A petroleum-based pitch in which a quinoline insoluble matter (QI) is 0.5 % by mass or less, a toluene insoluble matter (TI) is 3.0% by mass or less, a softening point is 60°C to 120°C, a viscosity at 200°C is 200 mPa·s or less, and a fixed carbon content Y (% by mass) satisfies formula (1):

$$80.0 \geq Y > 0.2X + 29.5 \ (1),$$

wherein

Y is a fixed carbon content (% by mass), and
X is a softening point (°C) (60 ≤ X ≤ 120).

[8] The petroleum-based pitch according to [7], wherein the fixed carbon content is 47.0% by mass or more.

[9] The petroleum-based pitch according to [7] or [8], which is an impregnation pitch for producing a carbon material.

[10] The petroleum-based pitch according to [9], wherein the carbon material is a graphite electrode.

[Advantageous Effects of Invention]

According to the present invention, a petroleum-based pitch having excellent impregnation property into a calcined body at the time of producing a carbon material, such as a graphite electrode, and having a high fixed carbon content can be obtained from petroleum-based heavy oil as a raw material. The petroleum-based pitch is easily impregnated into a calcined body and has a high fixed carbon content, and thus the quality of the obtained carbon material can be improved.

BRIEF DESCRIPTION OF DRAWINGS

FIG. 1 is a flow chart showing an example of a petrochemical process for thermal cracking of petroleum, such as naphtha and a process for producing ethylene bottom oil.

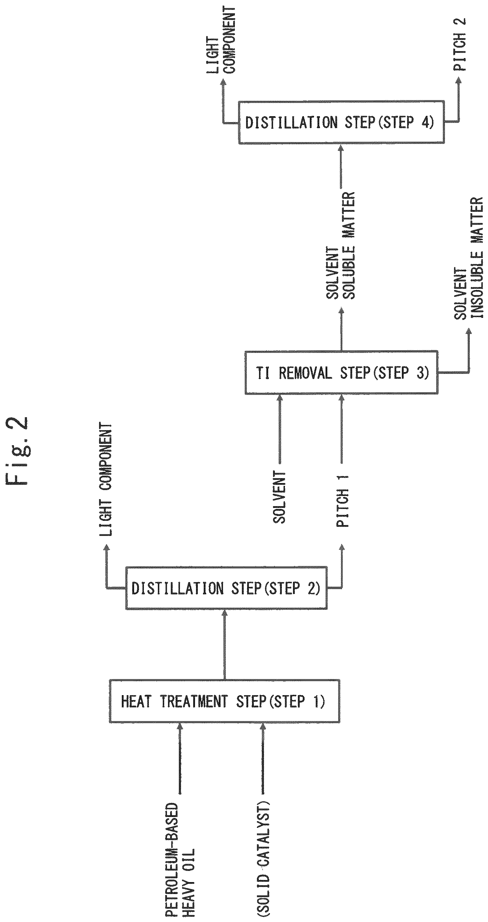

FIG. 2 is a flow chart showing an embodiment of a method for producing a petroleum-based pitch.

FIG. 3 is a diagram showing the relationship between the softening point and the fixed carbon content of various pitches produced from ethylene bottom oil under different production conditions.

DESCRIPTION OF EMBODIMENTS

Hereinafter, preferred embodiments of the present invention will be described, but it should be understood that the present invention is not limited to these embodiments only, and various applications can be made within the spirit and practice of the present invention.

In the present specification, when using "to" for a numerical range, the numerical values at both ends are the upper limit value and the lower limit value, respectively, and are included in the numerical range.

<Manufacturing process of graphite electrode>

The carbon materials refer to various types of formed carbon materials, such as graphitic tubes, graphitic crucibles, graphitic boats, and graphite electrodes. Hereinafter, a general manufacturing process of the graphite electrode will be described.

1. Kneading step

A step of mixing needle coke and a binder pitch together and kneading them

2. Forming step

A step of forming the kneaded product to obtain a formed product having a predetermined size and shape

3. Calcining step

A step of calcining the formed body to obtain a calcined body

4. Impregnation step

A step of filling the calcined body with an impregnation pitch

5. Re-calcining step

A step of re-calcining the calcined body filled with the impregnation pitch to obtain a re-calcined body

6. Graphitization step

A step of graphitizing the re-calcined body

7. Processing step

A step of forming the graphitized body into a predetermined shape by cutting or the like to form a graphite electrode

1. Kneading step

Needle coke, which is pulverized, classified, and blended in a predetermined grain ratio, and a binder pitch are mixed together and kneaded. The blending amount of the binder pitch varies, depending on the kneading method and the forming method, but is generally about 20 parts by mass to 30 parts by mass with respect to 100 parts by mass of the needle coke.

The kneaded product may include a puffing inhibitor, such as iron oxide.

A commercially available mixing apparatus or kneading apparatus can be used for mixing and kneading. Specific examples thereof include a mixing apparatus and a kneading apparatus, such as a mixer and a kneader. The kneading temperature varies, depending on the binder pitch used, but is generally around 150°C. The softening point of the binder pitch is preferably 130°C or less, and more preferably 110°C or less. In the case of kneading at around 150°C, when the softening point of the binder pitch is higher than 130°C, it is difficult to sufficiently knead. After kneading, the kneaded product is cooled to a temperature suitable for subsequent forming (100°C to 130°C).

2. Forming step

The kneaded product is formed to obtain a formed product having a predetermined size and shape. The forming method can be appropriately selected from extrusion, molding, etc., depending on the target carbon material. When the target carbon material is a graphite electrode, extrusion into a cylindrical shape is common.

3. Calcining step

The formed body of the previous step is heated and calcined at 700°C to 1000°C to obtain a calcined body. The calcining step is preferably carried out in a combustion exhaust gas non-oxidizing atmosphere. The formed body softens at the initial stage of a temperature rise, a large amount of decomposition gas is generated by thermal decomposition and polycondensation of the binder pitch at 200°C to 500°C, and the formation of pores and volume shrinkage occur. The binder pitch carbonizes at 500°C to 600°C. The calcining step often requires about one month, including cooling.

### 4. Impregnation step

In the calcining step, the binder pitch generally loses 35% to 45% of its mass as a volatile matter. At this time, a large number of pores are generated in the calcined body. The impregnation step is to fill the pores with the impregnation pitch. The impregnation is carried out, for example, by placing the calcined body in an autoclave, degassing under reduced pressure, injecting a molten impregnation pitch, and injecting the impregnation pitch into the pores at a gas pressure of around 1 MPa at about 200°C.

### 5. Re-calcining step

The calcined body filled with the impregnation pitch is re-calcined to obtain a re-calcined body. The re-calcining can also be carried out under the same conditions as in the calcining step. The impregnation step and the re-calcining step may be repeated, if necessary.

### 6. Graphitization step

The re-calcined body is placed in a furnace surrounded by an insulating material (Acheson furnace, LWG furnace, etc.), and subjected to a heat treatment by resistance heat generation of packing coke or the re-calcined body by energization. The temperature of graphitization is 2000°C to 3000°C. This temperature is necessary to convert amorphous carbon in the re-calcined body into crystalline graphite. In order to convert the re-calcined body into graphite, the heat treatment is preferably carried out for several days.

### 7. Processing step

The graphitized body is formed into a graphite electrode product having a predetermined shape by machining, such as cutting. The density (bulk density) of the graphite electrode varies, depending on the electric furnace installation used and the operating conditions of the electric furnace, but preferably is 1.5 g/cm$^3$ to 1.9 g/cm$^3$.

<Method for producing petroleum-based pitch>

The method for producing a petroleum-based pitch according to an embodiment comprises at least the following steps 1 to 4 in this order, and may comprise other steps. The method for producing a petroleum-based pitch according to another embodiment comprises the following steps 1 and 2 in this order, and steps 3 and 4 can be omitted.

Step 1: subjecting a petroleum-based heavy oil to a heat treatment
Step 2: distilling the heat-treated product obtained in step 1 to obtain a pitch 1 as a high boiling point component
Step 3: removing a toluene insoluble matter (TI) from the pitch 1 obtained in step 2 to obtain a component with reduced TI
Step 4: distilling the component with reduced toluene insoluble matter (TI) obtained in step 3 to obtain a pitch 2 as a high boiling point component

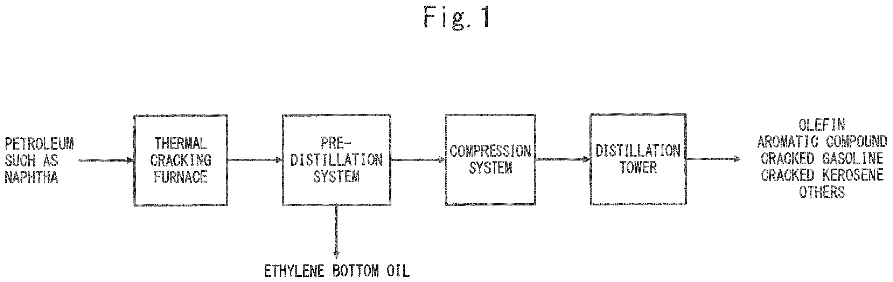

In the petrochemical industry, in general, naphtha and the like are thermally cracked at a high temperature, and the obtained thermally cracked product is distilled and separated into fractions of ethylene, propylene, and other olefins; aromatic compounds, such as benzene, toluene, and xylene; cracked gasoline, cracked kerosene, etc., to obtain products. Among these fractions, a heavy fraction having the highest boiling point is referred to as ethylene bottom oil, which is used in a raw material of carbon black, etc., and as a fuel (see FIG. 1). Since a thermal cracking plant for naphtha and the like is often referred to as an ethylene plant, the aforementioned heavy fraction is referred to as ethylene bottom oil.

Although the properties of ethylene bottom oil obtained by thermal cracking of naphtha-containing raw materials depend on the type of naphtha-containing raw material, thermal cracking conditions, operating conditions of the refining distillation tower, etc., the general properties are that the 50% distillation temperature is 200°C to 400°C, the aromatic carbon content is 50% by mass or more, the flash point is 70°C to 100°C, and the 50°C kinematic viscosity is less than 40 mm$^2$/s. However, since the ethylene bottom oil is a mixture of hydrocarbons, the above values may vary to some extent.

The petroleum-based heavy oil may be ethylene bottom oil, an ethylene bottom oil heavy fraction obtained by removing an arbitrary ratio (for example, 5 to 70% by mass) of light components from ethylene bottom oil by a distillation operation, etc., or the removed ethylene bottom oil light fraction, other petroleum-based heavy oil, or a mixture thereof. In one embodiment, the petroleum-based heavy oil is ethylene bottom oil. Furthermore, a heavy oil, such as coal tar may be added to the petroleum-based heavy oil. Examples of other petroleum-based heavy oils include, but are not limited to, fluid catalytic cracking oil (FCC decant oil), normal pressure distillation residue oil, and vacuum distillation residue oil. The sulfur content and nitrogen content of the pitch are preferably as small as possible because they cause puffing during calcining. When a graphite electrode is produced using a pitch containing a large amount of metal components, these metal components evaporate during graphitization, reducing the density of the graphite electrode, which may be undesirable in terms of product quality. From these points of view, fluid catalytic cracking oil (FCC decant oil) is preferable as the other petroleum-based heavy oil. Although the properties of fluidized catalytic cracking oil (FCC decant oil) depend on the raw materials and operating conditions, the general properties are that the 50% distillate temperature is 300 to 450°C, the flash point is 60°C to 160°C, and the 40°C kinematic viscosity is less than 40 mm$^2$/s. However, since fluid catalytic cracking oil (FCC decant oil) is a complex mixture, the above values may vary to some extent.

(Step 1)

Step 1 is a step of subjecting a petroleum-based heavy oil to a heat treatment. The heat treatment is preferably carried out under a non-oxidizing gas atmosphere in a sealed vessel. Examples of the non-oxidizing gas include nitrogen gas, argon, hydrogen gas, lower alkanes, such as methane and ethane, and a mixed gas of these non-oxidizing gases, and nitrogen gas is preferable from the viewpoint of cost and ease of handling.

The heat treatment temperature is preferably 360°C or more, more preferably 390°C or more, and still more preferably 410°C or more. The heat treatment temperature is preferably 500°C or less, and more preferably 450°C or less. The upper limit values and the lower limit values can be arbitrarily combined. The heat treatment temperature is preferably 360°C to 500°C, more preferably 390°C to 500°C, and still more preferably 410°C to 450°C.

Appropriate heat treatment time depends on the heat treatment temperature. When the heat treatment temperature is 360°C to 390°C, it is preferably 8 hours or more, and more preferably 16 hours or more, from the time when the predetermined heat treatment temperature is reached (the same applies hereinafter). When the heat treatment temperature is 360°C to 390°C, it is preferably 48 hours or less. When the heat treatment temperature is 360°C to 390°C, it is preferably 8 hours to 48 hours, and more preferably 16 to 48 hours. When the heat treatment temperature is more than 390°C and 430°C or less, it is preferably 0.5 hours or more, and more preferably 1 hour or more. When the heat treatment temperature is more than 390°C and 430°C or less, it is preferably 24 hours or less, and more preferably 16 hours or less. When the heat treatment temperature is more than 390°C and 430°C or less, it is preferably 0.5 hours to 24 hours, and more preferably 1 hour to 16 hours. When the heat treatment temperature is more than 430°C and 500°C or less, it is preferably 0.1 hours or more, and more preferably 0.5 hours or more. When the heat treatment temperature is more than 430°C and 500°C or less, it is preferably 16 hours or less, and more preferably 8 hours or less. When the heat treatment temperature is more than 430°C and 500°C or less, it is preferably 0.1 hours to 16 hours, and more preferably 0.5 hours to 8 hours. The upper limit values and the lower limit values can be arbitrarily combined. By setting the heat treatment time within the above ranges, a pitch having a sufficient fixed carbon content can be obtained.

The pressure at the beginning of heat treatment (initial pressure) is preferably 0 MPaG, but is not particularly limited. The pressure in the sealed vessel is increased by hydrogen, and lower alkanes, such as methane and ethane, generated by thermal decomposition during heat treatment. The pressure inside the sealed vessel is not limited, but pressurized conditions are preferable, since TI is more likely to be generated under normal pressure, and the final pitch yield decreases.

In step 1, an additive, such as a solid catalyst may be added to the petroleum-based heavy oil. The solid catalyst is a catalyst that does not dissolve in the reaction substrate (petroleum-based heavy oil) and does not decompose even at the heat treatment temperature, and examples thereof include solid acid catalysts, such as activated clay, silica alumina, and zeolite. As described in JP S60-179493 A and JP S60-240790 A, these solid acid catalysts are known to suppress the occurrence of fouling during heat treatment of petroleum-based heavy oil, and are useful in heat treatment under relatively severe reaction conditions for the purpose of improving the fixed carbon content of the pitch. Since the added solid catalyst can be removed as a solvent insoluble matter together with TI in step 3, the added solid catalyst is not mixed into the pitch finally obtained in step 4.

(Step 2)

Step 2 is a step of removing low boiling point components by distilling the heat-treated product obtained in step 1 to obtain a pitch 1 as a high boiling point component. When steps 3 and 4 are omitted, the pitch 1 obtained in step 2 is the petroleum-based pitch of one embodiment.

The distillation method in step 2 may be any of atmospheric distillation, reduced-pressure distillation (vacuum distillation), or a combination of atmospheric distillation and reduced-pressure distillation, and can be appropriately selected. The internal temperature of a distillation apparatus depends on the distillation pressure, but it is preferable that it does not exceed 360°C. This is because, when the temperature exceeds 360°C, TI is more likely to be generated, and the final pitch yield may decrease. The lower limit temperature does not affect the properties of the pitch, but is preferably 200°C or higher in terms of economic efficiency, since, when the temperature is low, the distillation pressure must be lowered in order to distill off a low boiling point substance (light component). In order to set the softening point of the pitch 2 obtained in step 4 to 120°C or less, it is preferable to obtain a pitch 1 having a softening point of about 180°C or less in step 2, although it depends on the petroleum-based heavy oil used, the heat treatment conditions in step 1, etc. When carrying out reduced-pressure distillation (vacuum distillation), the pressure during distillation is preferably 100 PaA to 10,000 PaA, and more preferably 300 PaA to 5,000 PaA in order to obtain a pitch 1 having a softening point of about 180°C or less. The softening point of the pitch can be controlled by the amount of light components removed. In general, the softening point increases as the amount of light components removed increases, i.e., as the distillation end point increases. When ethylene bottom oil is used as the petroleum-based heavy oil, in order to set the softening point of the pitch 1 to about 180°C or less, the distillation end point in terms of normal pressure is preferably 450°C or less, more preferably 420°C or less, and still more preferably 400°C or less, although it depends on the heat treatment conditions in step 1 and the distillation apparatus.

(Step 3)

Step 3 is a step of removing a toluene insoluble matter (TI) from the pitch 1 obtained in step 2 to obtain a component with reduced TI. The method for removing TI is not particularly limited, and examples thereof include a method in which a component with reduced TI is obtained by adding an appropriate solvent to the pitch 1 obtained in step 2, and extracting a solvent soluble matter of the pitch 1 into the solvent to separate and remove the solvent insoluble matter. In this case, the component with reduced TI comprises the solvent soluble matter and the solvent used. On the other hand, the solvent insoluble matter includes TI and a solid catalyst, which is optionally added.

Examples of suitable solvents include a solvent that dissolves only the toluene soluble matter (TS) without dissolving TI in the pitch, and such a solvent is preferable. Specifically, benzene; alkylbenzenes, such as toluene, and xylene; and mixtures thereof are preferable. Benzene and alkylbenzene rich fractions obtained in petrochemical processes can also be utilized. Such fractions include, for example, cracked gasoline and cracked kerosene.

Cracked gasoline is a mixture composed mainly of hydrocarbons having 6 to 8 carbon atoms and produced in petrochemical processes, and is a fraction having a boiling point in the range of 65°C to 150°C at 1 atm. However, since cracked gasoline is a mixture of hydrocarbons, the number of carbon atoms and boiling point may vary to some extent.

Examples of primary components of cracked gasoline include benzene, toluene, ethylbenzene, xylene, styrene and hexane.

Cracked kerosene is a mixture composed mainly of hydrocarbons having 9 or more carbon atoms and produced in petrochemical processes, and is a fraction having a boiling point in the range of 90°C to 230°C at 1 atm. However, since cracked kerosene is a mixture of hydrocarbons, the number of carbon atoms and boiling point may vary to some extent.

Examples of primary components of cracked kerosene include xylene, styrene, allylbenzene, propylbenzene, methylethylbenzene, trimethylbenzene, methylstyrene, dicyclopentadiene, indane, indene, methylpropylbenzene, methylpropenylbenzene, ethylstyrene, divinylbenzene, methylindene, naphthalene, and methyldicyclopentadiene.

The amount of solvent added is preferably 25 parts by mass to 5000 parts by mass, and more preferably 300 parts by mass to 2000 parts by mass, with respect to 100 parts by mass of the pitch 1. When it is 25 parts by mass or more, it is possible to extract efficiently, although it varies slightly, depending on the extraction conditions. When the amount exceeds 5000 parts by mass, the extraction efficiency does not change significantly, and therefore it is preferably 5000 parts by mass or less from the viewpoint of economic efficiency and productivity.

The extraction temperature is not particularly limited. Extraction can be carried out at room temperature, but heating conditions with better extraction efficiency are preferred. When extraction under heating conditions is carried out at normal pressure, it is necessary to carry out extraction below the boiling point of the solvent used. When heating at or above the boiling point, extraction can be carried out under reflux conditions or under pressure using a sealed vessel.

A method for separating the solvent in which the solvent soluble matter is dissolved, and the solvent insoluble matter is not particularly limited, but for example, centrifugal separation, filtration, and a combination thereof can be used.

(Step 4)

Step 4 is a step of distilling off light components from the component obtained in step 3 in which the toluene insoluble matter (TI) is reduced to obtain a pitch 2 as a high boiling point component. The pitch 2 obtained in step 4 is the petroleum-based pitch of one embodiment.

The distillation method in step 4 may be any of atmospheric distillation, reduced-pressure distillation (vacuum distillation), or a combination of atmospheric distillation and reduced-pressure distillation, and can be appropriately selected. The internal temperature of a distillation apparatus depends on the distillation pressure, but it is preferable that it does not exceed 360°C. This is because when the temperature exceeds 360°C, the polycondensation reaction is likely to proceed, and TI is more likely to be generated. The lower limit temperature does not affect the properties of the pitch, but is preferably 200°C or higher in terms of economic efficiency, since, when the temperature is low, the distillation pressure must be lowered in order to distill off a low boiling point substance (light component). When carrying out reduced-pressure distillation (vacuum distillation), the pressure during distillation is preferably 100 PaA to 10,000 PaA, and more preferably 300 PaA to 5,000 PaA in order to obtain a pitch 2 having a softening point of 120°C or less. The softening point of the pitch can be controlled by the amount of light components removed. In general, the softening point increases as the amount of light components removed increases, that is, as the distillation end point increases. When ethylene bottom oil is used as the petroleum-based heavy oil, in order to set the softening point of the pitch 2 to 120°C or less, the distillation end point in terms of normal pressure is preferably 450°C or less, more preferably 420°C or less, and still more preferably 400°C or less, although it depends on the heat treatment conditions in step 1 and the distillation apparatus. Further, the distillation end point in terms of normal pressure is preferably 250°C or more, and more preferably 300°C or more, although it depends on the heat treatment conditions in step 1 and the distillation apparatus. When the distillation end point is less than 250°C, there is a concern that the amount of light components volatilized at the impregnation temperature (for example, 200°C) is large, and the viscosity of the pitch may abnormally increase during the impregnation step.

<Petroleum-based pitch>

The petroleum-based pitch of one embodiment can be suitably used as an impregnation pitch for use in the production of carbon materials. The petroleum-based pitch of one embodiment can be suitably used as an impregnation pitch for use in the production of graphite electrodes. The petroleum-based pitch of one embodiment can be used as a binder pitch for use in the production of graphite electrodes. The petroleum-based pitch of one embodiment can also be used as an impregnation pitch and a binder pitch for producing carbon materials other than graphite electrodes.

The quinoline insoluble matter (QI) of the petroleum-based pitch of one embodiment is 0.5% by mass or less. The smaller the QI, the better the pitch-impregnation property, and thus the QI is preferably 0.3% by mass or less, and more preferably 0.1% by mass or less. The lower limit of QI is not particularly limited, but is, for example, 0.0% by mass or 0.001% by mass. The QI is determined by the method described in the Example section.

The toluene insoluble matter (TI) of the petroleum-based pitch of one embodiment is 3.0% by mass or less. The smaller the TI, the better the pitch-impregnation property, and thus the TI is preferably 2.0% by mass or less, and more preferably 1.0% by mass or less. The lower limit of TI is not particularly limited, but is, for example, 0.0% by mass or 0.1% by mass. The TI is determined by the method described in the Example section.

The softening point of the petroleum-based pitch of one embodiment is 60°C to 120°C. The lower the softening point, the better the fluidity of the pitch and impregnation property to the calcined body, and thus the softening point is 120°C or less, preferably 110°C or less, and more preferably 100°C or less. The softening point is 60°C or more, preferably 70°C or more, and more preferably 75°C or more. The upper limit values and the lower limit values can be arbitrarily combined. The softening point is preferably 70°C to 110°C, and more preferably 75°C to 100°C. The softening point is determined by the method described in the Example section.

The viscosity at 200°C of the petroleum-based pitch of one embodiment is 200 mPa·s or less. The lower the viscosity, the higher the fluidity and impregnation property of the pitch, and thus the viscosity at 200°C is preferably 100 mPa·s or less, more preferably 70 mPa·s or less, and still more preferably 40 mPa·s or less. The lower limit of the viscosity at 200°C is not particularly limited, but is, for example, 5 mPa·s or 10 mPa·s. The viscosity is determined by the method described in the Example section.

Since the density of the obtained carbon material tends to increase as the fixed carbon content increases, the fixed carbon content of the petroleum-based pitch of one embodiment is preferably 47.0% by mass or more, more preferably 48.0% by mass or more, and still more preferably 50.0% by mass or more. As described above, it is preferable that the fixed carbon content be higher. However, in order to obtain a pitch having a higher fixed carbon content, more severe heat treatment conditions are required, so that there may be a problem, such as coking occurring during the heat treatment. Therefore, the fixed carbon content is preferably 80.0% by mass or less, preferably 70.0% by mass or less, and more preferably 65.0% by mass or less. The upper limit values and the lower limit values can be arbitrarily combined. The fixed carbon content is preferably 47.0% by mass to 80.0% by mass, more preferably 48.0% by mass to 70.0% by mass, and still more preferably 50.0% by mass to 65.0% by mass. The fixed carbon content is determined by the method described in the Example section.

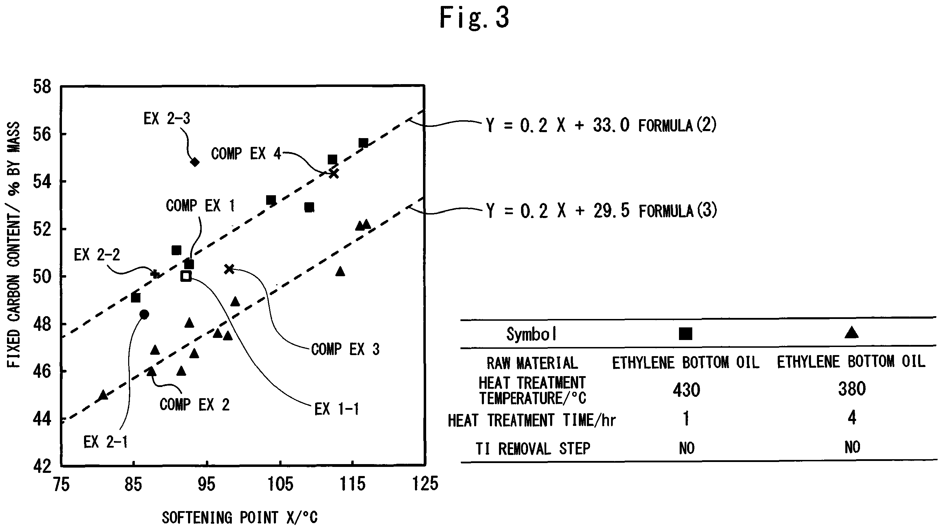

It is generally known that there is a proportional relationship between the softening point of the pitch and the fixed carbon content. FIG. 3 shows the relationship between the softening point and the fixed carbon content of pitches, which are prepared by distilling the heat-treated product obtained by subjecting ethylene bottom oil to a heat treatment under different heat treatment conditions, under different distillation conditions. FIG. 3 shows that the relationship between the softening point and the fixed carbon content can be approximated by a linear equation when the heat treatment conditions are the same and the distillation conditions are changed. It can be seen that the value of the intercept varies, depending on the heat treatment conditions, but the value of the slope is 0.2, regardless of the heat treatment conditions. In addition, it can be seen that the more severe the heat treatment conditions (high temperature and/or long time), the larger the value of the intercept, and a pitch having a higher fixed carbon content with the same softening point is obtained.

The petroleum-based pitch of one embodiment satisfies formula (1). That is, the value of the fixed carbon content Y (% by mass) of the petroleum-based pitch exceeds the value calculated by substituting the softening point X (°C) of the petroleum-based pitch into the formula (1). Petroleum-based pitches satisfying this condition have a higher fixed carbon content compared to pitches having similar softening points.

$$80.0 \geq Y > 0.2X + 29.5 \ (1),$$

wherein

Y is a fixed carbon content (% by mass), and
X is a softening point (°C) ($60 \leq X \leq 120$).

By simultaneously satisfying the above-mentioned requirements, the petroleum-based pitch can achieve both good impregnation property and high fixed carbon content, which are difficult to achieve by conventional methods.

The method for producing the petroleum-based pitch is not particularly limited as long as it is a method capable of obtaining a pitch satisfying the above-mentioned characteristics, but a production method including the above-mentioned steps 1 to 4 is preferable. When the pitch obtained in step 2 satisfies the above-described characteristics, steps 3 and 4 may be omitted.

EXAMPLES

The present invention will be further described with reference to Examples, Comparative Examples, and Reference Examples below, but these Examples merely illustrate examples of the present invention, and the present invention is not limited to these Examples.

<Method for measuring softening point (SP)>

It was measured in accordance with JIS K 2425:2006 "8. Measuring method for softening point of tar pitch (ring and ball method)" of the "Test method of creosote oil, prepared tar and tar pitch".

<Method for measuring fixed carbon (FC) content>

It was measured in accordance with JIS K 2425:2006 "11. Method of determination of fixed carbon content" of the "Test method of creosote oil, prepared tar and tar pitch".

<Method for measuring quinoline insoluble matter (QI)>

It was measured in accordance with the filtration method described in JIS K 2425:2006 "15. Method of determination of quinoline-insoluble content in tar pitch" of the "Test method of creosote oil, prepared tar and tar pitch".

<Method for measuring toluene insoluble matter (TI)>

It was measured in accordance with the filtration method described in JIS K 2425:2006 "14.2 Method of determination of toluene-insoluble content in prepared tar and tar pitch" of the "Test method of creosote oil, prepared tar and tar pitch".

<Method for measuring viscosity>

Viscosity at 160°C, 180°C, 200°C, 210°C, and 220°C was measured in accordance with ASTM D5018-18 "Standard Test Method for Shear Viscosity of Coal-Tar and Petroleum Pitches".

<Method for measuring true density>

It was measured in accordance with ASTM D4892-14(2019) "Standard Test Method for Density of Solid Pitch (Helium Pycnometer Method)".

<Method for preparing ethylene bottom oil light fraction>

Using 894 kg of ethylene bottom oil as a raw material, distillation refinement was carried out at a pot temperature of 101°C and an operating pressure of 533 to 1,067 PaA using distillation equipment having a theoretical plate number of 15 (Sulzer packing) to obtain 544 kg of an ethylene bottom oil heavy fraction as a bottom liquid. The initial boiling point of the obtained ethylene bottom oil heavy fraction was 218°C. The components of about 350 kg obtained as distillate were used as the ethylene bottom oil light fraction.

<Filterability test>

The measurement was carried out with reference to the methods described in Japanese Unexamined Utility Model Application Publication No. S57-64743 and JP S63-97691 A. A calcined body piece cut out from the calcined body described in "3. Calcining step" of the manufacturing process of the graphite electrode described above used as a filter plate (diameter: 50 mm$\varphi$, thickness: 30 mm) was attached to an impregnation pitch filterability test device (Japanese Unexamined Utility Model Application Publication No. S57-64743), and the time it took for 100 g of the pitch to filter out under conditions of 210°C and a pressure of 5 kg/cm$^2$ was measured to compare the impregnation property of the pitches. The efflux times are listed in Table 1. The shorter the efflux time, the better the impregnation property. When 100 g of pitch does not flow out in all amounts within 60 min, it is considered "unfilterable", which means that the impregnation property is extremely poor.

<Calculation method of formula (2) and formula (3)>

The heat-treated product obtained in step 1 of Comparative Example 1 was distilled under different distillation conditions to prepare pitches having different softening points. The softening point and the fixed carbon content of each pitch obtained were measured, and formula (2) was calculated using the least squares method.

$$Y = 0.2X + 33.0 \quad (2)$$

The heat-treated product obtained in step 1 of Comparative Example 2 was distilled under different distillation conditions to prepare pitches having different softening points. The softening point and the fixed carbon content of each pitch obtained were measured, and formula (3) was calculated using the least squares method.

$$Y = 0.2X + 29.5 \quad (3)$$

Example 1-1

3,000 g of ethylene bottom oil was introduced into a SUS autoclave with a capacity of 6 L. The autoclave was sealed under a nitrogen gas atmosphere, and the inside of the vessel was heated to 430°C at a rate of 5°C/min while stirring. After 1 hour had elapsed since the temperature reached 430°C, the heating was terminated, and the product was allowed to cool to room temperature (step 1). The yield of the heat-treated product obtained was 2,790g. 600 g of the obtained heat-treated product was distilled under reduced pressure (distillation pressure: 667 PaA) so that the distillation end point became 355°C in terms of normal pressure, whereby 222 g of pitch 1 was obtained (step 2). The obtained pitch 1 has a softening point of 110°C, TI of 13.9% by mass, and QI of 0.0% by mass. To 222 g of pitch 1, 2,220g of toluene was added, and the mixture was heated and stirred at 130°C for 1 hour. Subsequently, the mixture was separated into a soluble matter and an insoluble matter by centrifugal separation (step 3). The light components were distilled off from the obtained soluble matter (i.e., component in which TI was reduced) by reduced-pressure distillation (step 4), and 184 g of pitch 2 was obtained as a distillation residue (high boiling point component) (corresponding to 29% yield with respect to the raw ethylene bottom oil). The above various tests were carried out using this pitch.

Example 2-1

3,000 g of an ethylene bottom oil light fraction was introduced into a SUS autoclave with a capacity of 6 L. The autoclave was sealed under a nitrogen gas atmosphere, and the inside of the vessel was heated to 400°C at a rate of 5°C/min while stirring. After 6 hours had elapsed since the temperature reached 400°C, the heating was terminated, and the product was allowed to cool to room temperature (step 1). The yield of the heat-treated product obtained was 2,940 g. 2,940 g of the obtained heat-treated product was distilled under reduced pressure (distillation pressure: 667 PaA) so that the distillation end point became 390°C in terms of normal pressure, whereby 617 g of pitch was obtained (21% yield with respect to the raw ethylene bottom oil light fraction) (step 2). Since the obtained pitch characteristics were as described in Table 1 and satisfied the above preferred pitch characteristics, steps 3 and 4 were omitted. A filterability test was carried out using this pitch.

Example 2-2

A Pitch was prepared according to the method described in Example 2-1, except that the heat treatment conditions and distillation conditions were changed as described in Table 1. The pitch yield was 570 g (19% yield with respect to the raw ethylene bottom oil light fraction) (step 2). Since the obtained pitch characteristics were as described in Table 1 and satisfied the above preferred pitch characteristics, steps 3 and 4 were omitted. A filterability test was carried out using this pitch.

Example 2-3

A pitch was prepared according to the method described in Example 2-1, except that the heat treatment conditions and distillation conditions were changed as described in Table 1. The pitch yield was 732 g (24% yield with respect to the raw ethylene bottom oil light fraction) (step 2). Since the obtained pitch characteristics were as described in Table 1 and satisfied the above preferred pitch characteristics, steps 3 and 4 were omitted. A filterability test was carried out using this pitch.

Comparative Example 1

600 g of the heat-treated product obtained in step 1 of Example 1 was distilled under reduced pressure so that the distillation end point became 335°C in terms of normal pressure, whereby 234 g of pitch was obtained (corresponding to 36% yield with respect to the raw ethylene bottom oil). The above various tests were carried out using this pitch.

Comparative Example 2

500 g of ethylene bottom oil was introduced into a SUS autoclave with a capacity of 1 L. The autoclave was sealed under a nitrogen gas atmosphere, and the inside of the vessel was heated to 380°C at a rate of 4°C/min while stirring. After 4 hours had elapsed since the temperature reached 380°C, the heating was terminated, and the product was allowed to cool to room temperature. The yield of the heat-treated product obtained was 492 g. 492 g of the obtained heat-treated product was distilled under reduced pressure (distillation pressure: 667 PaA) so that the distillation end point became 330°C in terms of normal pressure, whereby 196 g of pitch was obtained (39% yield with respect to the raw ethylene bottom oil). The above various tests were carried out using this pitch.

Comparative Example 3

500 g of ethylene bottom oil was introduced into a SUS autoclave with a capacity of 1 L. The autoclave was sealed under a nitrogen gas atmosphere, and the inside of the vessel was heated to 380°C at a rate of 4°C/min while stirring. After 24 hours had elapsed since the temperature reached 380°C, the heating was terminated, and the product was allowed to cool to room temperature. The yield of the heat-treated product obtained was 465 g. 465 g of the obtained heat-treated product was distilled under reduced pressure (distillation pressure: 667 PaA) so that the distillation end point became 335°C in terms of normal pressure, whereby 214 g of pitch was obtained (43% yield with respect to the raw ethylene bottom oil). The above various tests were carried out using this pitch.

Comparative Example 4

A pitch was prepared according to the method described in Comparative Example 3, except that the conditions of the reduced-pressure distillation were such that the distillation end point was 345°C in terms of normal pressure. The pitch yield was 191 g (38% yield with respect to the raw ethylene bottom oil). The above various tests were carried out using this pitch.

Reference Example 1

The data of a commercially available coal tar-based impregnation pitch are presented.
As shown in Table 1, the petroleum-based pitches of the examples achieve both good impregnation property and high fixed carbon content, and is obviously suitable as an impregnation pitch for producing a carbon material.

Table 1

| | | | Examples | | | |
|---|---|---|---|---|---|---|
| | | | 1-1 | 2-1 | 2-2 | 2-3 |
| Step 1 | | Raw material | Ethylene bottom oil | Ethylene bottom oil light fraction | Ethylene bottom oil light fraction | Ethylene bottom oil light fraction |
| | | Heat treatment temperature (°C) | 430 | 400 | 410 | 430 |
| | | Heat treatment time (hr) | 1 | 6 | 6 | 6 |
| Step 2 | | Distillation end point (°C) (in terms of normal pressure) | 355 | 390 | 390 | 370 |
| Step 3 | | TI removal step | YES | N0 | NO | NO |
| Step 4 | | Distillation end point (°C) (in terms of normal pressure) | 300 | - | - | - |
| Pitch | | Yield with respect to raw oil (%) | 29 | 21 | 19 | 24 |
| Pitch properties | | Softening point: X (°C) | 92. 2 | 86.5 | 88. 0 | 93. 4 |
| | | Fixed carbon content: Y (% by mass) | 50.0 | 48.4 | 50.1 | 54.8 |
| | | 0.2X + 29.5 | 47.9 | 46. 8 | 47.1 | 48. 2 |
| | | 80.0≧Y>0.2X + 29.5 | YES | YES | YES | YES |
| | | TI (% by mass) | 0.9 | 0.2 | 1.2 | 1.0 |
| | | QI (% by mass) | 0.0 | 0.0 | 0.0 | 0.0 |
| | | True dens ity (g/cm³) | 1.22 | 1.19 | 1. 20 | 1.22 |
| | Viscosity (mPa· s) | 160°C | 375 | 149 | 159 | 334 |
| | | 180°C | 119 | 76 | 59 | 100 |
| | | 200°C | 51 | 29 | 26 | 42 |
| | | 210°C | 35 | 25 | 20 | 29 |
| | | 220°C | 26 | 22 | 16 | 22 |
| Filterabilit y test | | Efflux time of pitch 100 g (min) | 17 | 9 | 20 | 12 |

(Continuation of Table 1)

| | | | Comparative Examples | | | | Ref. Ex. |
|---|---|---|---|---|---|---|---|
| | | | 1 | 2 | 3 | 4 | 1 |
| Step 1 | | Raw material | Ethylene bottom oil | Ethylene bottom oil | Ethylene bottom oil | Ethylene bottom oil | - |
| | | Heat treatment temperature (°C) | 430 | 380 | 380 | 380 | - |
| | | Heat treatment time (hr) | 1 | 4 | 24 | 24 | - |
| Step 2 | | Distillation end point (°C) (in terms of normal pressure) | 335 | 330 | 335 | 345 | - |
| Step 3 | | TI removal step | NO | NO | NO | NO | - |

(continued)

| | | Comparative Examples | | | | Ref. Ex. |
|---|---|---|---|---|---|---|
| | | 1 | 2 | 3 | 4 | 1 |
| Step 4 | Distillation end point (°C) (in terms of normal pressure) | - | - | - | - | - |
| Pitch | Yield with respect to raw oil (%) | 36 | 39 | 43 | 38 | - |
| Pitch properties | Softening point: X (°C) | 92.6 | 87.5 | 98.1 | 112. 5 | 70-110 |
| | Fixed carbon content: Y (% by mass) | 50.5 | 46.0 | 50.3 | 54.3 | >50 |
| | 0.2X + 29.5 | 48.0 | 47.0 | 49.1 | 52.0 | 43.5-51.5 |
| | 80.0≧Y>0.2X + 29.5 | YES | NO | YES | YES | YES-NO |
| | TI (% by mass) | 12.1 | 6.6 | 17.8 | 17.0 | 10-20 |
| | QI (% by mass) | 0.0 | 0.0 | 0.0 | 0.0 | 0.0 |
| | True dens ity (g/cm$^3$) | 1.22 | 1.20 | 1.22 | 1.24 | 1.28-1.30 |
| | Viscosity (mPa· s) 160°C | 570 | 378 | 928 | 3056 | - |
| | 180°C | 177 | 132 | 260 | 1134 | |
| | 200°C | 72 | 58 | 108 | 359 | - |
| | 210°C | 49 | 41 | 73 | 195 | - |
| | 220°C | 36 | 31 | 54 | 137 | - |
| Filterability test | Efflux time of pitch 100 g (min) | unfilterable | 20 | unfilterable | unfilterable | <30 |

**Claims**

1. A method for producing a petroleum-based pitch comprising at least the following steps 1 to 4:

   step 1: subjecting a petroleum-based heavy oil to a heat treatment;
   step 2: distilling the heat-treated product obtained in step 1 to obtain a pitch 1 as a high boiling point component;
   step 3: removing a toluene insoluble matter (TI) from the pitch 1 obtained in step 2 to obtain a component with reduced TI; and
   step 4: distilling the component with reduced toluene insoluble matter (TI) obtained in step 3 to obtain a pitch 2 as a high boiling point component.

2. The method for producing a petroleum-based pitch according to claim 1, wherein the petroleum-based heavy oil is ethylene bottom oil.

3. The method for producing a petroleum-based pitch according to claim 1 or 2, wherein the heat treatment temperature in step 1 is 360°C to 500°C.

4. The method for producing a petroleum-based pitch according to claim 1 or 2, wherein the removing of the toluene insoluble matter (TI) in step 3 is carried out by adding a solvent to the pitch 1 and extracting a solvent soluble matter of the pitch 1 into the solvent, and
   wherein the solvent is at least one selected from the group consisting of benzene, alkylbenzene, cracked gasoline, and cracked kerosene.

5. The method for producing a petroleum-based pitch according to claim 1 or 2, wherein, in step 1, when the heat treatment temperature is 360°C to 390°C, the heat treatment time is 8 hours to 48 hours; when the heat treatment temperature is more than 390°C and 430°C or less, the heat treatment time is 0.5 hours to 24 hours; and when the heat treatment temperature is more than 430°C and 500°C or less, the heat treatment time is 0.1 hours to 16 hours.

**6.** A method for producing a graphite electrode, wherein the petroleum-based pitch obtained by the production method according to claim 1 or 2 is used as an impregnation pitch.

**7.** A petroleum-based pitch in which a quinoline insoluble matter (QI) is 0.5 % by mass or less, a toluene insoluble matter (TI) is 3.0% by mass or less, a softening point is 60°C to 120°C, a viscosity at 200°C is 200 mPa·s or less, and a fixed carbon content Y (% by mass) satisfies formula (1):

$$80.0 \geq Y > 0.2X + 29.5 \ (1),$$

wherein

Y is a fixed carbon content (% by mass), and
X is a softening point (°C) ($60 \leq X \leq 120$).

**8.** The petroleum-based pitch according to claim 7, wherein the fixed carbon content is 47.0% by mass or more.

**9.** The petroleum-based pitch according to claim 7 or 8, which is an impregnation pitch for producing a carbon material.

**10.** The petroleum-based pitch according to claim 9, wherein the carbon material is a graphite electrode.

Fig. 1

PETROLEUM SUCH AS NAPHTHA → THERMAL CRACKING FURNACE → PRE-DISTILLATION SYSTEM → COMPRESSION SYSTEM → DISTILLATION TOWER → OLEFIN / AROMATIC COMPOUND / CRACKED GASOLINE / CRACKED KEROSENE / OTHERS

PRE-DISTILLATION SYSTEM → ETHYLENE BOTTOM OIL

Fig. 2

EP 4 534 629 A1

Fig. 3

EP 4 534 629 A1

<table>
<tr><td colspan="2" align="center">**INTERNATIONAL SEARCH REPORT**</td><td colspan="2">International application No.<br>**PCT/JP2023/015323**</td></tr>
</table>

**A.  CLASSIFICATION OF SUBJECT MATTER**

*C10C 3/02*(2006.01)i; *C01B 32/00*(2017.01)i; *C08L 95/00*(2006.01)i; *C10C 1/16*(2006.01)i
FI:  C10C3/02 E; C10C1/16; C08L95/00; C01B32/00

According to International Patent Classification (IPC) or to both national classification and IPC

**B.  FIELDS SEARCHED**

Minimum documentation searched (classification system followed by classification symbols)

C10C3/02; C01B32/00; C08L95/00; C10C1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2018-53071 A (KYUSHU UNIV.) 05 April 2018 (2018-04-05) | 1-10 |
| A | WO 2021/181905 A1 (SHOWA DENKO K.K.) 16 September 2021 (2021-09-16) | 1-10 |
| A | WO 2022/049953 A1 (SHOWA DENKO K.K.) 10 March 2022 (2022-03-10) | 1-10 |
| A | JP 10-316972 A (MITSUBISHI CHEM. CORP.) 02 December 1998 (1998-12-02) | 1-10 |
| A | JP 2021-80143 A (JFE CHEMICAL CORP.) 27 May 2021 (2021-05-27) | 1-10 |

☐ Further documents are listed in the continuation of Box C.     ☑ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/015323**

| Box No. III | Observations where unity of invention is lacking (Continuation of item 3 of first sheet) |

This International Searching Authority found multiple inventions in this international application, as follows:

(Invention 1) Claims 1-6

Claims 1-6 have the special technical feature of distilling a thermally-treated product obtained by subjecting a petroleum-based heavy oil to heat treatment to obtain pitch 1 as a high-boiling point component and removing a toluene-insoluble matter (TI) therefrom, and thus are classified as invention 1.

(Invention 2) Claims 7-10

Claims 7-10 do not share a same or corresponding special technical feature with claim 1 classified as invention 1.

In addition, claims 7-10 are not dependent on claim 1.

Furthermore, claims 7-10 are not substantially identical to or similarly closely related to any of the claims classified as invention 1.

Accordingly, claims 7-10 cannot be classified as invention 1.

Claims 7-10 have the special technical feature wherein a quinoline-insoluble matter (QI) is 0.5% by mass or less, a toluene-insoluble matter (TI) is 3.0% by mass or less and a fixed carbon content Y (% by mass) fulfills formula (1), and thus are classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

INTERNATIONAL SEARCH REPORT

Information on patent family members

International application No.

**PCT/JP2023/015323**

| Patent document cited in search report | | | Publication date (day/month/year) | Patent family member(s) | | | Publication date (day/month/year) |
|---|---|---|---|---|---|---|---|
| JP | 2018-53071 | A | 05 April 2018 | (Family: none) | | | |
| WO | 2021/181905 | A1 | 16 September 2021 | US EP CN | 2022/0220387 3971263 113939577 | A1 A1 A | |
| WO | 2022/049953 | A1 | 10 March 2022 | (Family: none) | | | |
| JP | 10-316972 | A | 02 December 1998 | (Family: none) | | | |
| JP | 2021-80143 | A | 27 May 2021 | (Family: none) | | | |

Form PCT/ISA/210 (patent family annex) (January 2015)

**REFERENCES CITED IN THE DESCRIPTION**

**Patent documents cited in the description**

- JP 60092388 A
- JP 2007002124 A
- JP S6092388 A
- JP S60179493 A
- JP S60240790 A
- JP S5764743 U
- JP S6397691 A